# FASCICULE DE BREVET EUROPEEN

(11) **EP 4 263 352 B1**
(45) Date de publication et mention de la délivrance du brevet: **05.02.2025**
(21) Numéro de dépôt: 21851687.0
(22) Date de dépôt: 17.12.2021
(51) Int. Cl.: B64D 27/35, B64B 1/32, B64B 1/34, B64C 29/00, B64D 27/357, B64D 35/024, B64D 35/026, B64C 15/02

(54) **DIRIGEABLE EQUIPE D'UN SYSTEME DE PROPULSION DISTRIBUEE ELECTRIQUE**
LUFTSCHIFF MIT EINEM VERTEILTEN ELEKTRISCHEN ANTRIEBSSYSTEM
AIRSHIP EQUIPPED WITH AN ELECTRIC DISTRIBUTED PROPULSION SYSTEM

(30) Priorité: 18.12.2020 FR 2013690
(43) Date de publication de la demande: 25.10.2023
(73) Titulaire: Flying Whales, 92150 Suresnes (FR)
(72) Inventeur: BERNARD, Jacques, 57070 Metz (FR); LE BLANC, Benoît, 92100 Boulogne-Billancourt (FR)
(74) Mandataire: IP Trust
(86) Numéro de dépôt international: PCT/FR2021/052377
(87) Numéro de publication internationale: WO 2022/129811

(56) Documents cités:
- EP-A1- 3 318 492
- WO-A1-2020/190223
- GB-A- 2 497 136
- US-A- 4 269 375
- US-A1- 2012 273 608
- US-A1- 2017 203 839
- US-A1- 2018 022 461

## Description

### Domaine technique

La présente invention se rapporte à un dirigeable à capacités de vols stationnaires. Elle se rapporte plus particulièrement à un dirigeable porteur de charges lourdes.

### État de la technique antérieure

Usuellement, un système de propulsion dans un aéronef comporte deux unités de génération de puissance électrique et deux bus électriques principaux, chacun étant raccordé à l'une des deux unités de générations de puissance électrique. En aval, le système de propulsion comporte une pluralité de propulseurs, chacun des propulseurs étant relié, dans une configuration nominale à l'un des deux bus électriques. C'est par exemple le cas de certains drones multirotors et d'aéronefs à décollage vertical.

Selon une configuration nominale, le point de propulsion droit d'un aéronef est par exemple électriquement raccordé à une unité de génération de puissance située à droite de l'aéronef, tandis que le point de propulsion gauche de l'aéronef est par exemple électriquement raccordé à une unité de génération de puissance située à gauche de l'aéronef.

Pour des raisons de redondance, il est prévu une étape de reconfiguration électrique pour le cas où l'une des deux unités de puissance présente un défaut. Par exemple, il est prévu une reconfiguration électrique possible pour alimenter le moteur gauche par l'unité de génération située à droite en cas de défaut de l'unité de génération située à gauche. À cet effet, il doit être prévu un circuit électrique de secours, raccordant le moteur gauche à l'unité de génération située à droite. Il en est bien sûr de même entre le moteur droit et l'unité de génération située à gauche.

Le document EP 3 521 172 B1 divulgue un système de propulsion électrique d'un aéronef, comprenant une première réserve d'énergie pour fournir de l'énergie électrique et une seconde réserve d'énergie pour fournir de l'énergie électrique, et plusieurs groupes propulseurs électriques pour fournir une puissance d'entraînement à l'aéronef. Une unité de distribution d'énergie est prévue pour transmettre l'énergie électrique fournie du premier accumulateur d'énergie et l'énergie électrique fournie du deuxième accumulateur d'énergie à au moins un groupe propulseur électrique. Cette unité de distribution d'énergie est également configurée pour charger la deuxième réserve d'énergie en utilisant une première partie de l'énergie pour au moins un groupe propulseur et une deuxième partie de l'énergie pour charger la deuxième réserve d'énergie.

Les circuits de secours doivent ainsi être électriquement découplés des liaisons électriques par les bus principaux en fonctionnement nominal, et doivent prendre le relais d'un bus principal en cas de défaillance d'une unité électrique. Cela implique qu'ils aient quasiment les mêmes caractéristiques que les bus principaux. Outre le poids embarqué de tels circuits de secours qui ne sont pas utiles de manière nominale, mais seulement en cas de défaut, la commande de ces circuits nécessite des actionneurs et effecteurs qui peuvent être également sources de pannes.

Un but de l'invention est de pallier cet inconvénient.

Le document US 2018/022461 A1 divulgue un dirigeable hybride utilisant l'une des deux technologies, ou les deux ensemble. La première technologie utilise une combinaison d'un gaz de levage (tel que l'hydrogène ou l'hélium) dans un volume central ou un ballon et une technologie multirotor pour le levage et les manœuvres. La deuxième technologie équipe le dirigeable d'un générateur embarqué pour charger les batteries pendant le vol pour des opérations de vol prolongées, avec un moteur à combustion interne (tel qu'un moteur à turbine à gaz à rapport puissance/poids élevé) entraînant le générateur. Une configuration quadricoptère ou autre multicoptère est souhaitable.

### Exposé de l'invention

Un but de l'invention est notamment de remédier à tout ou partie des inconvénients précités.

Selon un premier aspect de l'invention, il est proposé un dirigeable selon la revendication 1 annexée, à capacités de vols stationnaires, comportant un système propulsif électrique comprenant :
- une pluralité de générateurs de puissance électrique,
- une pluralité de bus électriques et
- une pluralité de points de propulsion électrique.

Dans le système propulsif selon l'invention, ladite pluralité de points de propulsion comprend des grappes propulsives formées chacune d'une pluralité de propulseurs électriques à hélice.

Un propulseur au sein de chacune de ces grappes propulsives est raccordé électriquement au moyen d'un bus électrique parmi la pluralité de bus électriques à un générateur au sein de la pluralité de générateurs de puissance électrique et au moins un autre propulseur au sein de cette grappe propulsive est raccordé électriquement au moyen d'un autre bus électrique parmi la pluralité de bus électriques à un autre générateur au sein de la pluralité de générateurs de puissance électrique.

Dans une version préférée de l'invention, chaque point de propulsion comprend une grappe propulsive formée d'une pluralité de propulseurs électriques à hélice et en chaque point de propulsion, un propulseur au sein de ladite grappe propulsive est raccordé électriquement au moyen d'un bus électrique parmi la pluralité de bus électriques à un générateur au sein de la pluralité de générateurs de puissance électrique et chaque autre propulseur au sein de cette grappe propulsive est raccordé électriquement au moyen d'un autre bus électrique parmi la pluralité de bus électriques à un autre générateur au sein de la pluralité de générateurs de puissance électrique.

Ainsi, il est proposé un découplage électrique entre un propulseur raccordé à un générateur de puissance électrique au moyen d'un bus électrique et un autre propulseur du même point de propulsion raccordé à un autre générateur de puissance électrique au moyen d'un autre bus électrique.

Le découplage permet :
- d'éviter la complexité de la reconfiguration du réseau en vol par le biais de contacteurs dynamiques de reconnexion, considérant que la technologie des contacteurs à haute puissance haut voltage n'est pas assez mature pour être utilisée en vol,
- d'éviter toute possibilité de propagation de défauts après la reconfiguration,
- de fournir une redondance native accrue sans reconfiguration.
- réduire des coûts de développement (la puissance par chaîne est divisée par deux),
- une validation plus facile (moins de complexité, car absence de reconfiguration),
- puissance/intensité réduite des équipements électriques.

Selon une possibilité, les générateurs de puissance électrique comprennent des turboalternateurs.

Les générateurs de puissance électrique peuvent être de type thermique.

Dans un mode de réalisation, les générateurs de puissance électrique comprennent des piles à combustible.

Selon l'invention, au moins une grappe de propulseurs est dédiée à une propulsion de croisière.

Selon l'invention, au moins une grappe de propulseurs est dédiée à une production d'une poussée sensiblement verticale.

Selon une possibilité, au moins une grappe de propulseurs est dédiée à une production d'une poussée vectorielle.

Selon l'invention, éventuellement en combinaison avec la possibilité ci-dessus, au moins une grappe de propulseurs est dédiée à une production d'une poussée sensiblement latérale.

Selon un deuxième mode aspect de l'invention, il est proposé un procédé de gestion, selon la revendication 5 annexée, d'un système propulsif électrique équipant un dirigeable à capacité de vols stationnaires selon le premier aspect de l'invention, ou l'un ou plusieurs de ses perfectionnements, ledit dirigeable comportant un module de gestion de la propulsion recevant des commandes de poussée d'un point de propulsion de la part d'un module de contrôle de vol, ledit module de gestion étant configuré pour adresser d'une part des instructions de demande de puissance à chacun des générateurs de puissances et d'autre part des commandes de poussée à chacun des propulseurs dudit point de propulsion.

Avantageusement, le procédé comprend en outre une modification des commandes de poussée à destination des propulseurs du point de propulsion en cas de détection d'une défaillance d'une unité de génération de puissance ou d'un propulseur.

### Description des figures

D'autres avantages et particularités de l'invention apparaîtront à la lecture de la description détaillée de mises en œuvre et de modes de réalisation nullement limitatifs, au regard de dessins annexés qui ne représentent pas des modes de réalisation de l'invention, mais qui peuvent être utiles à la compréhension de certains aspects de celle-ci, et sur lesquels :
[Fig.1] représente schématiquement une vue en perspective d'un dirigeable ne représentant pas un mode de réalisation de l'invention, de tribord et depuis sa proue,
[Fig.2] représente schématiquement une vue de dessus du dirigeable représenté sur **Figure 1****.**
[Fig.3] représente schématiquement une vue détaillée de systèmes représentés sur **Figure 2****,**
[Fig.4] représente schématiquement un schéma de raccordement de systèmes représentés sur **Figure 2****.**

### Description de mode de réalisation

Les modes de réalisation décrits ci-après n'étant nullement limitatifs, on pourra notamment considérer des variantes de l'invention ne comprenant qu'une sélection de caractéristiques décrites, par la suite isolées des autres caractéristiques décrites, si cette sélection de caractéristiques entre dans le cadre défini par les revendications annexées.

Sur les figures, un élément apparaissant sur plusieurs figures conserve la même référence.

### Aéronef à capacités de vols stationnaires

Les aéronefs sont divisés en deux classes principales en fonction du moyen de sustentation utilisé. L'aérostat utilise une force statique tandis que l'aérodyne génère une force dynamique pour équilibrer leur poids ; on les désigne souvent par « plus légers » ou « plus lourds » que l'air.

La présente invention se rapporte à un aéronef à capacité de vol stationnaire.

Un ballon dirigeable est un exemple d'un tel aéronef, et renferme des dispositifs destinés à assurer sa sustentation ainsi que des systèmes de propulsion lui conférant une certaine manœuvrabilité. Pour se déplacer, les dirigeables utilisent un système de propulsion.

Un aérodyne, c'est-à-dire un aéronef « plus lourd que l'air » dont la sustentation est principalement assurée par une force aérodynamique, peut également être un aéronef à capacité de vol stationnaire, mais ne fait pas partie de l'invention revendiquée.

C'est par exemple le cas lorsque la portance de l'aérodyne est assurée par un groupe motopropulseur à poussée vectorielle qui a la capacité d'évoluer, lors d'une phase de conversion, d'une configuration de vol dans laquelle la poussée est verticale à une configuration de vol dans laquelle la poussée est horizontale.

C'est également le cas lorsque la portance de l'aérodyne est assurée par une voilure tournante.

Par ailleurs, certains aérodynes présentent d'une part une voilure fixe et d'autre part une voilure tournante et ont la capacité d'évoluer, lors d'une phase de conversion, d'une configuration de vol à voilure fixe à une configuration de vol à voilure tournante.

### Propulseur

Un propulseur selon l'invention vise un motopropulseur électrique à hélice. Le motopropulseur peut bien entendu comprendre d'autres éléments, tel qu'un motoréducteur.

Dans la présente description, le terme propulseur vise notamment des dispositifs de propulsion de type statique présentant une composante horizontale et/ou verticale. Le terme propulseur vise en outre des dispositifs de propulsion à poussée vectorielle, par exemple par orientation du flux de sortie au moyen d'une d'une tuyère orientable.

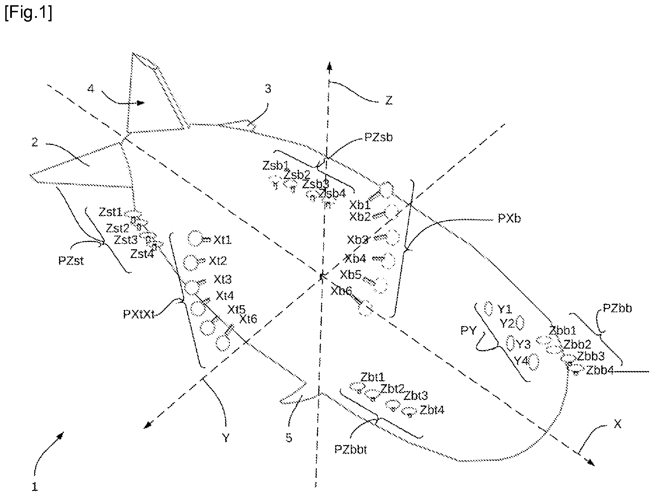

**Figure 1** illustre un dirigeable 1 dont présentant un axe de roulis selon une direction longitudinale X, un axe de tangage selon une direction transversale Y, et un axe de lacet selon une direction verticale Z, perpendiculaire à la direction longitudinale et à la direction transversale.

Le dirigeable 1 comporte au niveau de la poupe deux stabilisateurs, respectivement un stabilisateur tribord 2 et un stabilisateur bâbord 3, dotés de gouvernes de profondeurs et une dérive 4 dotée de gouverne de direction.

Le dirigeable 1 comporte en outre deux ailerons latéraux, respectivement un aileron tribord 5 et un aileron bâbord 6 **(****Figure 1**).

Le dirigeable 1 est équipé de quatre générateurs G1, G2, G3, G4 de puissance électrique. Dans l'exemple représenté, les générateurs de puissance sont de type turboalternateurs, aussi appelés turbogénérateurs. Selon une variante, les générateurs de puissance sont raccordés électriquement à des piles à combustible ou/et à des batteries électriques. Toujours dans l'exemple représenté, chacun des quatre générateurs présentant une puissance de 1 MW.

Dans l'exemple représenté, les quatre générateurs G1, G2, G3, G4 sont implantés à l'intérieur des ailerons latéraux 5 et 6. Plus précisément, les turbogénérateurs G1 et G2 sont implantés à l'intérieur de l'aileron tribord 5 tandis que les turbogénérateurs G3 et G4 sont implantés à l'intérieur de l'aileron tribord 6.

Toujours dans l'exemple représenté, le dirigeable 1 est équipé de 7 points de propulsions, respectivement PXt, PXb, PY, PZbt, PZbb, PZst, PZsb permettant le vol en stationnaire et le déplacement de l'appareil.

Les points de propulsions PXt et PXb sont agencés pour générer une poussée selon la direction longitudinale X vers la proue ou la poupe. Les points de propulsion PXt et PXb sont disposés sur tribord et sur bâbord du dirigeable 1.

Encore plus précisément, chacun des points de propulsion PXt et PXb est une grappe propulsive de 6 propulseurs de type motopropulseur électrique à hélice Xt1, Xt2, Xt3, Xt4, Xt5, Xt6, respectivement Xb1, Xb2, Xb3, Xb4, Xb5, Xb6. Les hélices de chacun des propulseurs des points de propulsion PXt et PXb sont par exemple de type hélices à trois pales.

Ces points de propulsions permettent ainsi de générer une poussée axiale vers l'avant, vers l'arrière ou un moment de lacet par poussée différentielle.

Le point de propulsion PY est agencé pour générer une poussée selon la direction transversale Y vers tribord ou bâbord, pour générer un moment selon l'axe de lacet. Dans l'exemple représenté, le point de propulsion PY est disposé au niveau de la proue du dirigeable 1, du côté de sa partie supérieure.

Encore plus précisément, le point de propulsion PY est une grappe propulsive de 4 propulseurs de type motopropulseur électrique à hélice Y1, Y2, Y3, Y4. Les hélices de chacun des propulseurs du point de propulsion PY sont par exemple de type hélices à trois pales.

Les points de propulsions PZbt et PZbb sont agencés pour générer une poussée selon la direction Z vers le bas ou le haut. Les points de propulsion PZbt et PZbb sont disposés au niveau de la proue, sur tribord et sur bâbord du dirigeable 1.

Encore plus précisément, chacun des points de propulsion PZbt et PZbb est une grappe propulsive de 4 propulseurs de type motopropulseur électrique à hélice Zbt1, Zbt2, Zbt3, Zbt4, respectivement Zbb1, Zbb2 Zbb3, Zbb4. Les hélices de chacun des propulseurs des points de propulsion Pzbt et PZbb sont par exemple de type hélices à trois pales.

Les points de propulsions PZst et PZsb sont agencés pour générer une poussée selon la direction Z vers le bas ou le haut. Les points de propulsion PZst et PZsb sont disposés au niveau de la poupe, sur tribord et sur bâbord du dirigeable 1.

Encore plus précisément, chacun des points de propulsion PZst et PZsb est une grappe propulsive de 4 propulseurs de type motopropulseur électrique à hélice Zst1, Zst2, Zst3, Zst4, respectivement Zsb1, Zsb2, Zsb3, Zsb4. Les hélices de chacun des propulseurs des points de propulsion Pzbt et PZbb sont par exemple de type hélices à trois pales.

Les points de propulsions PZbt, PZbb, PZst et PZsb permettent ainsi de générer une poussée verticale vers le haut ou vers le bas, ou un moment de tangage par poussée différentielle entre l'avant et l'arrière, ou un moment de roulis par poussée différentielle entre tribord et bâbord.

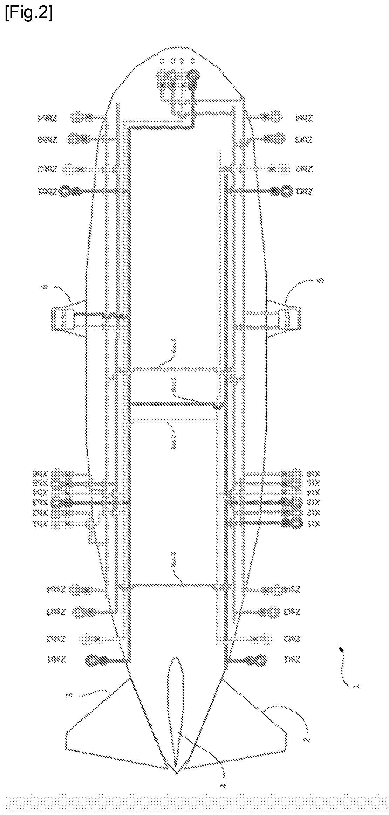

Comme illustré sur **Figure 2****,** le dirigeable 1 est en outre équipé de 4 bus électriques d'une capacité de transport de puissance de 1 MW, Bus 1, Bus 2, Bus 3, Bus 4.

Chacun des bus électriques, respectivement Bus 1, Bus 2, Bus 3, Bus 4 est raccordé à une turbine, respectivement G1, G2, G3, G4 au moyen de systèmes S1, S2, S3, S4 qui seront décrits ci-après.

Le Bus 1 est raccordé au motopropulseur Xt1, Xt3, Xb3, Y4, Zbt1, Zbb1, Zst1, Zsb1.

Le Bus 2 est raccordé au motopropulseur Xt4, Xb1, Xb4, Y3, Zbt2, Zbb2, Zst2, Zsb2.

Le Bus 3 est raccordé au motopropulseur Xt2, Xt5, Xb5, Y5, Zbt3, Zbb3, Zst3, Zsb3.

Le Bus 4 est raccordé au motopropulseur Xt6, Xb2, Xb6, Y1, Zbt4, Zbb4, Zst4, Zsb4.

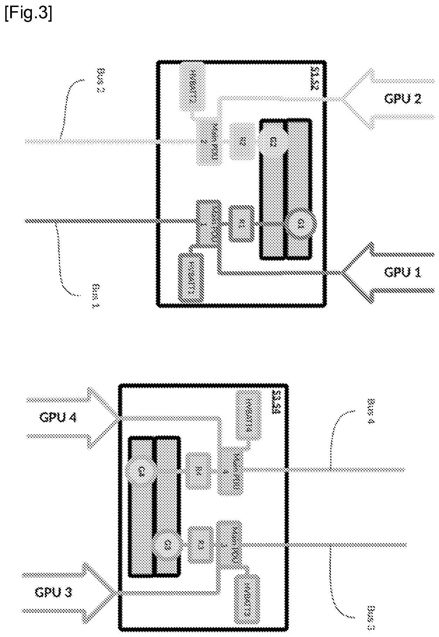

Les systèmes S1, S2, S3, S4 sont maintenant décrits en référence à Figure 3.

Le système S1 comporte :
- un turbogénérateur G1,
- un dispositif redresseur R1, raccordé au turbogénérateur G1,
- une unité principale de distribution de puissance Main PDU 1, de l'anglais *Power Distribution Unit,* raccordée à un bus Bus 1,
- une batterie HVBATT1, raccordée à l'unité de distribution de puissance Main PDU 1.

L'unité principale de puissance Main PDU1 est également raccordée à une alimentation par le sol GPU1 (de l'anglais *Ground Power Unit*).

Le système S2 comporte :
- un turbogénérateur G2,
- un dispositif redresseur R2, raccordé au turbogénérateur G2,
- une unité principale de distribution de puissance Main PDU 2, raccordée à un bus Bus 2,
- une batterie HVBATT2, raccordée à l'unité de distribution de puissance Main PDU 2.

L'unité principale de puissance Main PDU2 est également raccordée à une alimentation par le sol GPU2.

Les systèmes S1 et S2 sont installés ensemble dans l'aileron bâbord 5 Le système S3 comporte :
- un turbogénérateur G3,
- un dispositif redresseur R3, raccordé au turbogénérateur G3,
- une unité principale de distribution de puissance Main PDU 3, raccordée à un bus Bus 3,
- une batterie HVBATT3, raccordée à l'unité de distribution de puissance Main PDU 3.

L'unité principale de puissance Main PDU3 est également raccordée à une alimentation par le sol GPU3.

Le système S4 comporte :
- un turbogénérateur G4,
- un dispositif redresseur R4, raccordé au turbogénérateur G4,
- une unité principale de distribution de puissance Main PDU 4, raccordée à un bus Bus 4,
- une batterie HVBATT4, raccordée à l'unité de distribution de puissance Main PDU 4.

L'unité principale de puissance Main PDU4 est également raccordée à une alimentation par le sol GPU4.

Les systèmes S3 et S4 sont installés ensemble dans l'aileron tribord 6.

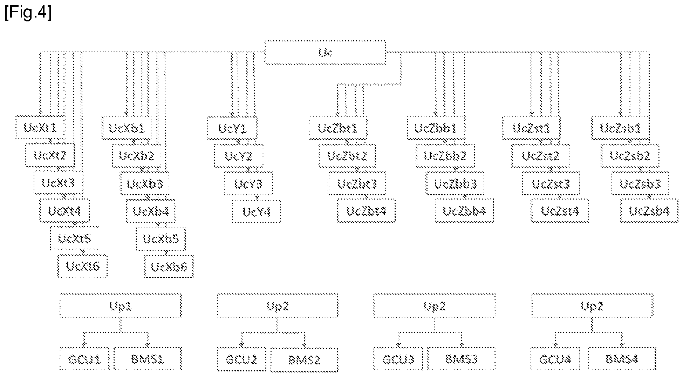

Ainsi qu'il est illustré sur **Figure 4****,** le contrôle du vol du dirigeable 1 est assuré par une unité de contrôle Uc, qui reçoit les ordres du pilote, les traite et les transmet à l'ensemble des motopropulseurs.

Les motopropulseurs sont équipés individuellement d'une unité de contrôle du pas d'hélice qui permet de gérer la poussée délivrée. Ainsi les ordres du pilote sont transmis :
- aux motopropulseurs Xt1, Xt2, Xt3, Xt4, Xt5, Xt6 du point de propulsion PXt, via les unités de contrôle respectivement UcXt1, UcXt2, UcXt3, UcXt4, UcXt5, UcXt6,
- aux motopropulseurs Xb1, Xb2, Xb3, Xb4, Xb5, Xb6 du point de propulsion PXb, via les unités de contrôle respectivement UcXb1, UcXb2, UcXb3, UcXb4, UcXb5, UcXb6,
- aux motopropulseurs Y1, Y2, Y3, Y4 du point de propulsion PY via les unités de contrôle respectivement UcY1, UcY2, UcY3, UcY4,
- aux motopropulseurs Zbt1, Zbt2, Zbt3, Zbt4 du point de propulsion PZbt via les unités de contrôle respectivement UcZbt1, UcZbt2, UcZbt3, UcZbt4,
- aux motopropulseurs Zbb1, Zbb2 Zbb3, Zbb4, du point de propulsion PZbb via les unités de contrôle respectivement UcZbb1, UcZbb2, UcZbb3, UcZbb4,
- aux motopropulseurs Zst1, Zst2, Zst3, Zst4 du point de propulsion PZst via les unités de contrôle respectivement UcZst1, UcZst2, UcZst3, UcZst4,
- aux motopropulseurs Zsb1, Zsb2, Zsb3, Zsb4 du point de propulsion PZsb via les unités de contrôle respectivement UcZsb1, UcZsb2, UcZsb3, UcZsb4.

L'unité de contrôle Uc répartit la demande du pilote sur l'ensemble des motopropulseurs. En cas de dysfonctionnement, soit d'une chaîne propulsive, soit d'un motopropulseur, elle répartit cette demande sur les unités fonctionnelles restantes.

Chaque chaine de propulsion est contrôlée par une unité de contrôle respectivement Up1, Up2, Up3, Up4.

Chaque turbogénérateur est contrôlé par une unité de contrôle GCU1, GCU2, GCU3, GCU4, de l'anglais *Générator Control Unit,* respectivement pour les générateurs G1, G2, G3, G4.

Chaque batterie est contrôlée par une unité de contrôle BMS1, BMS2, BMS3, BMS4, de l'anglais *Battery Management System,* respectivement pour les batteries HVBATT1, HVBATT2, HVBATT3, HVBATT4.

L'unité de contrôle Up1 s'assure de la gestion de la puissance électrique disponible sur Bus 1. En fonction de la puissance totale des motopropulseurs Xt1, Xt3, Xb3, Y4, Zbt1, Zbb1, Zst1, Zsb1 alimentés par Bus 1, l'unité Up1 contrôle le point de fonctionnement du turbogénérateur G1, via le contrôleur GCU1 et gère la charge ou la décharge de la batterie HVBATT1 via le contrôleur BMS1.

L'unité de contrôle Up2 s'assure de la gestion de la puissance électrique disponible sur Bus 2. En fonction de la puissance totale des motopropulseurs Xt4, Xb1, Xb4, Y3, Zbt2, Zbb2, Zst2, Zsb2 alimentés par Bus 2, l'unité Up2 contrôle le point de fonctionnement du turbogénérateur G2, via le contrôleur GCU2 et gère la charge ou la décharge de la batterie HVBATT2 via le contrôleur BMS2.

L'unité de contrôle Up3 s'assure de la gestion de la puissance électrique disponible sur Bus 3. En fonction de la puissance totale des motopropulseurs Xt2, Xt5, Xb5, Y5, Zbt3, Zbb3, Zst3, Zsb3 alimentés par Bus 3, l'unité Up3 contrôle le point de fonctionnement du turbogénérateur G3, via le contrôleur GCU3 et gère la charge ou la décharge de la batterie HVBATT3 via le contrôleur BMS3.

L'unité de contrôle Up4 s'assure de la gestion de la puissance électrique disponible sur Bus 4. En fonction de la puissance totale des motopropulseurs Xt6, Xb2, Xb6, Y1, Zbt4, Zbb4, Zst4, Zsb4 alimentés par Bus 4, l'unité Up4 contrôle le point de fonctionnement du turbogénérateur G4, via le contrôleur GCU4 et gère la charge ou la décharge de la batterie HVBATT4 via le contrôleur BMS4.

Ainsi, on comprend pour chacun des points de propulsion, un propulseur dudit point de propulsion est raccordé électriquement au moyen d'un bus électrique à l'un des générateurs de la pluralité de générateurs de puissance électrique et un autre propulseur dudit point de propulsion est raccordé électriquement au moyen d'un autre bus électrique à un autre générateur de la pluralité de générateurs de puissance.

On comprend que lorsqu'un un turbogénérateur cesse de fonctionner, pour chaque point de propulsion qui présentait auparavant une poussée prédéterminée, et lorsque ledit point de propulsion comporte 4 propulseurs, chacun des propulseurs étant alimenté indépendamment des autres par 1 turbogénérateur, la nouvelle poussée du point de propulsion n'est diminuée que du quart de la poussée précédente. Cette perte de poussée peut éventuellement être corrigée par modification de la poussée des 3 autres propulseurs dudit point de propulsion.

Ainsi, en situation de défaillance d'une unité de génération de puissance et de fonctionnement normal d'une autre unité de génération de puissance, une unité de commande peut générer des instructions à destination de propulseurs raccordés à l'unité de génération de puissance fonctionnant normalement et une mise en œuvre des instructions par lesdits propulseurs.

De même, si un propulseur d'un point de propulsion cesse de fonctionner, et lorsque ledit point de propulsion comporte 4 propulseurs, chacun des propulseurs étant alimenté indépendamment des autres par 1 turbogénérateur, la nouvelle poussée du point de propulsion n'est diminuée que du quart de la poussée précédente. Cette perte de poussée peut éventuellement être corrigée par modification de la poussée des 3 autres propulseurs.

Ainsi, en situation de défaillance d'un propulseur d'un point de propulsion et de fonctionnement normal d'un autre propulseur dudit point de propulsion, une unité de commande peut générer des instructions à destination des propulseurs dudit point de propulsion fonctionnant normalement, et une mise en œuvre des instructions par lesdits propulseurs.

Bien sûr, l'invention n'est pas limitée aux exemples qui viennent d'être décrits et de nombreux aménagements peuvent être apportés à ces exemples sans sortir du cadre de l'invention tel que défini par les revendications annexées.

De plus, les différentes caractéristiques, formes, variantes et modes de réalisation de l'invention peuvent être associés les uns avec les autres selon diverses combinaisons dans la mesure où ils entrent dans le cadre défini par les revendications annexées, et ne sont pas incompatibles ou exclusifs les uns des autres.

## Revendications

1. Dirigeable à capacité de vol stationnaire, comportant un système propulsif électrique comprenant :
- une pluralité de générateurs de puissance électrique (G1, G2, G3, G4),
- une pluralité de bus électriques (Bus 1, Bus 2, Bus 3, Bus 4) et
- une pluralité de points de propulsion électrique (PXt, PXb, PY, PZbt, PZbb, PZst, PZsb),
et **caractérisé en ce que**
ladite pluralité de points de propulsion comprenant au moins une grappe propulsive formée d'une pluralité de propulseurs électriques à hélice dédiée pour exercer une poussée longitudinale, au moins une grappe propulsive formée d'une pluralité de propulseurs électriques à hélice dédiée pour exercer une poussée verticale et
au moins une desdites grappes propulsives de poussée longitudinale ou verticale étant agencée de sorte que chaque propulseur au sein de ladite grappe propulsive est raccordé électriquement au moyen d'un bus électrique (Bus 1, Bus 2, Bus 3, Bus 4) parmi ladite pluralité de bus électriques à un générateur au sein de ladite pluralité de générateurs de puissance électrique et chaque autre propulseur au sein de ladite grappe propulsive est raccordé électriquement au moyen d'un autre bus électrique parmi ladite pluralité de bus électriques à un autre générateur au sein de ladite pluralité de générateurs de puissance électrique,
et
**en ce que** la pluralité de points de propulsion comprend en outre au moins une grappe propulsive (PY) dédiée à une production d'une poussée latérale, ladite grappe propulsive (PY) étant agencée de sorte que l'un de ses propulseurs est raccordé électriquement au moyen d'un bus électrique (Bus 1, Bus 2, Bus 3, Bus 4) parmi ladite pluralité de bus électriques à un générateur au sein de ladite pluralité de générateurs de puissance électrique et chaque au moins un autre propulseur au sein de ladite grappe propulsive est raccordé électriquement au moyen d'un autre bus électrique parmi ladite pluralité de bus électriques à un autre générateur au sein de ladite pluralité de générateurs de puissance électrique.

2. Dirigeable selon la revendication précédente, dans lequel chaque point de propulsion comprend une grappe propulsive formée d'une pluralité de propulseurs électriques à hélice où en chaque point de propulsion, un propulseur au sein de ladite grappe propulsive est raccordé électriquement au moyen d'un bus électrique parmi la pluralité de bus électriques à un générateur au sein de la pluralité de générateurs de puissance électrique et chaque autre propulseur au sein de ladite grappe propulsive est raccordé électriquement au moyen d'un autre bus électrique parmi ladite pluralité de bus électriques à un autre générateur au sein de ladite pluralité de générateurs de puissance électrique.

3. Dirigeable selon l'une quelconque des revendications précédentes, dans lequel les générateurs de puissance électrique comprennent des turboalternateurs.

4. Dirigeable selon l'une quelconque des revendications précédentes, dans lequel les générateurs de puissance électrique comprennent des piles à combustible.

5. Procédé de gestion d'un système propulsif électrique équipant un dirigeable à capacité de vols stationnaires selon l'une quelconque des revendications précédentes, ledit dirigeable comportant un module de gestion de la propulsion recevant des commandes de poussée d'un point de propulsion de la part d'un module de contrôle de vol, ledit module de gestion étant configuré pour adresser d'une part des instructions de demande de puissance à chacun des générateurs de puissances et d'autre part des commandes de poussée à chacun des propulseurs dudit point de propulsion.

6. Procédé selon la revendication précédente, comprenant en outre une modification des commandes de poussée à destination des propulseurs du point de propulsion en cas de détection d'une défaillance d'une unité de génération de puissance ou d'un propulseur.

## Patentansprüche

1. Luftschiff mit Schwebeflugfähigkeit, das ein elektrisches Antriebssystem aufweist, umfassend:
- eine Vielzahl von Generatoren (G1, G2, G3, G4) elektrischer Leistung,
- eine Vielzahl von Elektrobussen (Bus 1, Bus 2, Bus 3, Bus 4) und
- eine Vielzahl von elektrischen Antriebspunkten (PXt, PXb, PY, PZbt, PZbb, PZst, PZsb),
und **dadurch gekennzeichnet, dass**
die Vielzahl von Antriebspunkten mindestens eine Antriebsgruppe, die aus einer Vielzahl von elektrischen Triebwerken mit einem speziellen Propeller ausgebildet ist, um einen Längsschub auszuüben, mindestens eine Antriebsgruppe umfasst, die aus einer Vielzahl von elektrischen Triebwerken mit einem speziellen Propeller ausgebildet ist, um einen Vertikalschub auszuüben, und
wobei mindestens eine der Längs- oder Vertikalschubantriebsgruppen angeordnet ist, sodass jedes Triebwerk innerhalb der Antriebsgruppe mittels eines Elektrobusses (Bus 1, Bus 2, Bus 3, Bus 4) unter der Vielzahl von Elektrobussen mit einem Generator innerhalb der Vielzahl von Generatoren elektrischer Leistung elektrisch verbunden ist und jedes andere Triebwerk innerhalb der Antriebsgruppe mittels eines anderen Elektrobusses unter der Vielzahl von Elektrobussen mit einem anderen Generator innerhalb der Vielzahl von Generatoren elektrischer Leistung elektrisch verbunden ist,
und dass die Vielzahl von Antriebspunkten ferner mindestens eine Antriebsgruppe (PY) umfasst, die für eine Erzeugung eines seitlichen Schubs vorgesehen ist, wobei die Antriebsgruppe (PY) angeordnet ist, sodass eines seiner Triebwerke mittels eines Elektrobusses (Bus 1, Bus 2, Bus 3, Bus 4) unter der Vielzahl von Elektrobussen mit einem Generator innerhalb der Vielzahl von Generatoren elektrischer Leistung elektrisch verbunden ist und jedes mindestens eine andere Triebwerk innerhalb der Antriebsgruppe mittels eines anderen Elektrobusses unter der Vielzahl von Elektrobussen mit einem anderen Generator innerhalb der Vielzahl von Generatoren elektrischer Leistung elektrisch verbunden ist.

2. Luftschiff nach dem vorstehenden Anspruch, wobei jeder Antriebspunkt eine Antriebsgruppe umfasst, die aus einer Vielzahl von elektrischen Propellertriebwerken ausgebildet ist, wobei
an jedem Antriebspunkt ein Triebwerk innerhalb der Antriebsgruppe mittels eines Elektrobusses unter der Vielzahl von Elektrobussen mit einem Generator innerhalb der Vielzahl von Generatoren elektrischer Leistung elektrisch verbunden ist und jedes andere Triebwerk innerhalb der Antriebsgruppe mittels eines anderen Elektrobusses unter der Vielzahl von Elektrobussen mit einem anderen Generator innerhalb der Vielzahl von Generatoren elektrischer Leistung elektrisch verbunden ist.

3. Luftschiff nach einem der vorstehenden Ansprüche, wobei die Generatoren elektrischer Leistung Turbogeneratoren umfassen.

4. Luftschiff nach einem der vorstehenden Ansprüche, wobei die Generatoren elektrischer Leistung Brennstoffzellen umfassen.

5. Verfahren zum Steuern eines elektrischen Antriebssystems, das ein Luftschiff mit Schwebeflugfähigkeit nach einem der vorstehenden Ansprüche ausstattet, wobei das Luftschiff ein Antriebssteuermodul aufweist, das Schubbefehle von einem Antriebspunkt seitens eines Flugsteuermoduls empfängt, wobei das Steuermodul konfiguriert ist, um einerseits Leistungsanforderungsanweisungen an jeden der Generatoren elektrischer Leistung und andererseits Schubbefehle an jedes der Triebwerke des Antriebspunkts zu richten.

6. Verfahren nach dem vorstehenden Anspruch, ferner umfassend eine Änderung der Schubbefehle, die für die Triebwerke des Antriebspunkts bestimmt sind, im Falle der Erkennung eines Ausfalls einer Leistungserzeugungseinheit oder eines Triebwerks.

## Claims

1. A hover-capable airship, comprising an electric propulsion system comprising:
- a plurality of electric power generators (G1, G2, G3, G4),
- a plurality of electrical buses (Bus 1, Bus 2, Bus 3, Bus 4) and
- a plurality of electric propulsion points (PXt, PXb, PY, PZbt, PZbb, PZst, PZsb),
**characterized in that** said plurality of propulsion points comprising at least one propellant bundle formed of a plurality of electric-driven propeller-based thrusters dedicated to exert a longitudinal thrust, at least one propellant bundle formed of a plurality of dedicated electric-driven propeller-based thrusters to exert a vertical thrust and
at least one of said longitudinal or vertical propellant bundles being arranged so that each thruster within said propellant bundle is electrically connected by means of an electrical bus (Bus 1, Bus 2, Bus 3, Bus 4) among said plurality of electrical buses to a generator within said plurality of electric power generators and each other thruster within said propellant bundle is electrically connected by means of another electrical bus among said plurality of electrical buses to another generator within said plurality of electric power generators,
and **in that** the plurality of propulsion points further comprises at least one propellant bundle (PY) dedicated to producing a lateral thrust, said propellant bundle (PY) being arranged so that one of its thrusters is electrically connected by means of an electrical bus (Bus 1, Bus 2, Bus 3, Bus 4) among said plurality of electrical buses to a generator within said plurality of electric power generators and each at least one other thruster within said propellant bundle is electrically connected by means of another electrical bus among said plurality of electrical buses to another generator within said plurality of electric power generators.

2. The airship according to the preceding claim, wherein each propulsion point comprises a propellant bundle formed of a plurality of electric propeller thrusters where at each propulsion point, a thruster within said propellant bundle is electrically connected by means of an electrical bus among the plurality of electrical buses to a generator within the plurality of electric power generators and each other thruster within said propellant bundle is electrically connected by means of another electrical bus among said plurality of electrical buses to another generator within said plurality of electric power generators.

3. The airship according to any of the preceding claims, wherein the electric power generators comprise turboalternators.

4. The airship according to any of the preceding claims, wherein the electric power generators comprise fuel cells.

5. A method for managing an electrical propulsion system equipping a hover-capable airship according to any one of the preceding claims, said airship comprising a propulsion management module receiving thrust commands from a propulsion point issued by a flight control module, said management module being configured to send, on the one hand, power request instructions to each of the power generators and, on the other hand, thrust commands to each of the thrusters of said propulsion point.

6. The method according to the preceding claim, further comprising a modification of the thrust commands send to the thrusters of the propulsion point in the event that a failure of a power generation unit or of a thruster is detected.
